Europäisches Patentamt

(19) European Patent Office

Office européen des brevets

(11) Publication number: **0 007 179**
**A1**

# EUROPEAN PATENT APPLICATION

(21) Application number: **79301135.4**

(22) Date of filing: **13.06.79**

(51) Int. Cl.³: **A 47 J 37/07**
**F 24 C 3/02**

(30) Priority: **13.06.78 GB 2675278**

(43) Date of publication of application:
**23.01.80 Bulletin 80/2**

(84) Designated Contracting States:
**DE FR GB IT NL SE**

(71) Applicant: **THE TILLEY LAMP COMPANY LIMITED**
**Derriaghy, Dunmurry**
**Belfast Northern Ireland(GB)**

(72) Inventor: **Campbell, Derek Ritchie**
**38 Beechill Park West**
**Belfast, BT8 4NU(GB)**

(74) Representative: **Arthur, John William et al,**
**14-18 Cadogan Street**
**Glasgow, G2 6QW(GB)**

(54) Gas cooker and burner unit for gas cooker.

(57) A gas cooker 12 having a burner unit 10 which is convertible to a) grill food or b) boil water in a kettle or cook food in a pot or pan.

The burner unit includes a burner tube 16 located below an opening 17 in a frame 14 and a pair of pivotal plates 18 which can overlie the opening 17 for grilling purposes or be pivoted away to leave the opening clear. In the latter position a grid 25 is located over the opening. The plates 18 have a radiant panel 19 on one face, i.e., the underface in the grilling position.

Thus the cooker can be used not only for grilling food located on a tray or spit 13 below the burner tube, but alternatively can be used to heat a kettle, pot or pan located on the grid 25 when the opening 17 is not closed by the plates.

The gas cooker may be transportable collapsible rotisserie.

FIG.2.

EP 0 007 179 A1

GAS COOKER WITH CONVERTIBLE BURNER UNIT

This invention relates to gas cookers especially, but not exclusively to a gas cooker having only one burner unit, for example, a portable gas cooker such as a rotisserie.

Portable rotisseries are known wherein a burner tube is located below a heat-reflector plate which in operation reflects downwardly infra-red rays onto a spit or grill tray. Such cookers are made specifically for grilling and little or no heat passes through the reflector plate so that the cooker cannot be used for boiling water or cooking food other than by grilling.

It is an object of the present invention to provide a gas cooker in which the burner element or one of the burner elements can be used alternatively for grilling or for other forms of cooking or boiling.

According to one aspect of the present invention there is provided a gas cooker including a burner unit whereof a horizontal burner tube is mounted in underslung relation to a frame symmetrical thereabout and whereby an opening in the frame can be masked immediately above the burner tube, or unmasked at least in part, by a reflector in the form of at least two plates each hinged or pivoted for movement about an axis spaced within the opening whereby the opening can be masked for grilling purposes or unmasked at least in part for heating a cooking utensil located over the opening.

According to another aspect of the invention there is provided a burner unit for a gas cooker, said unit comprising a horizontally disposed burner tube mounted in underslung relation to a frame symmetrical thereabout and whereby an opening in the frame can be masked immediately above the burner tube, or unmasked at least in part, by a reflector in the form of at least two plates each hinged or pivoted for movement about an axis spaced within the opening.

An embodiment of the present invention will now be described, by way of example with reference to the accompanying drawings, in which:

Fig. 1 is a front perspective view of a gas cooker embodying a burner unit according to the present invention with reflector plates in the unmasking position.

Fig. 2 illustrates the burner unit with one reflector plate in the masking position;

Fig. 3 illustrates the burner unit with both reflector plates in the masking position;

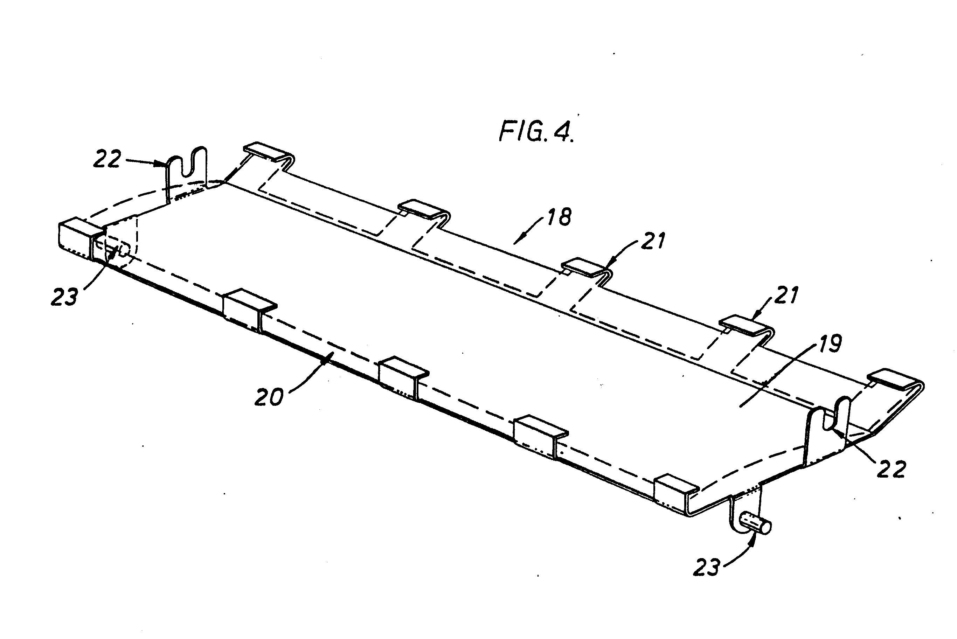

Fig. 4 illustrates a reflector plate and

Fig. 5 illustrates the gas cooker in a collapsed transportable position.

Referring to the drawings, a gas cooker 10 in the form of an infra-red rotisserie includes one burner unit 12 mounted above a spit arrangement 13.

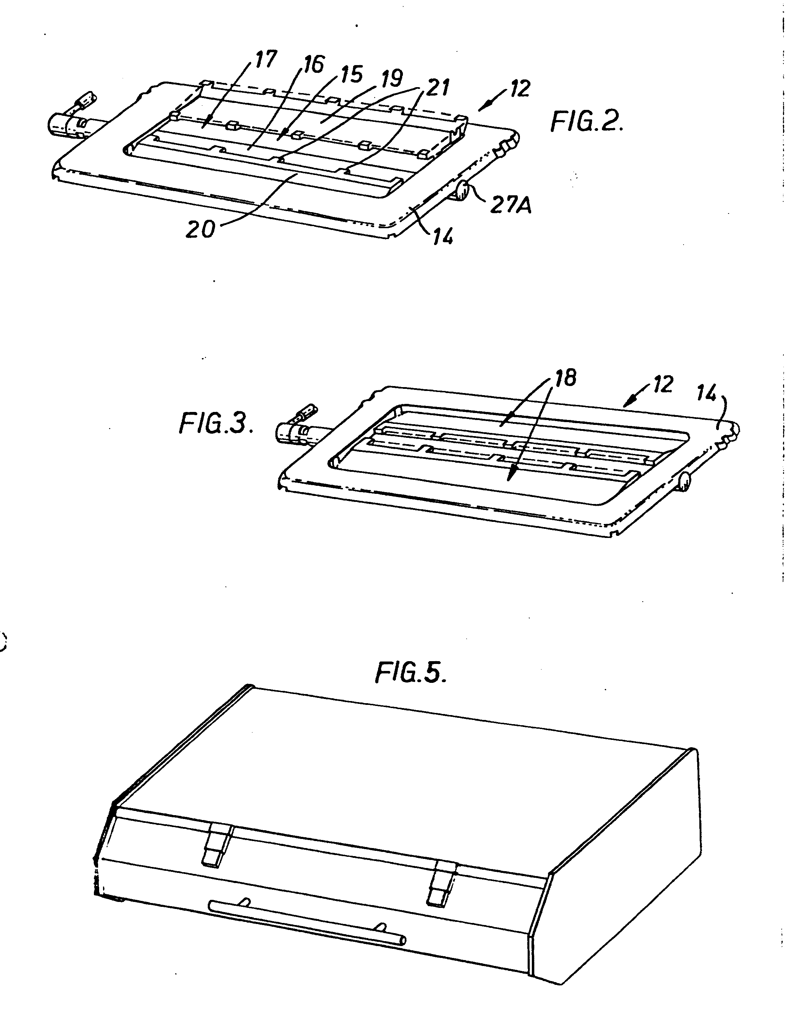

The infra-red rays for cooking articles on the spit is provided by the burner unit 12 which includes a rectangular platform or frame 14 having a rectangular opening 15 therein and centrally thereof. A burner tube 16 is mounted on brackets under the frame 14 parallel with the longer sides thereof, and below the mid-way longitudinal axis of the frame so as to divide the area directly below the opening into two similar rectangular gaps 17. Two similar rectangular plates 18, of similar areal dimensions to the gaps 17, are provided to mask the part of the opening above the respective gap. The plates 18 are separately pivoted about a longitudinal axis parallel to but spaced from the longitudinal axis of the tube, the pivotal axis of each plate 18 being adjacent to side of the frame 14 and the other side being contiguous with and resting on the top of the tube (Figs. 2 and 3).

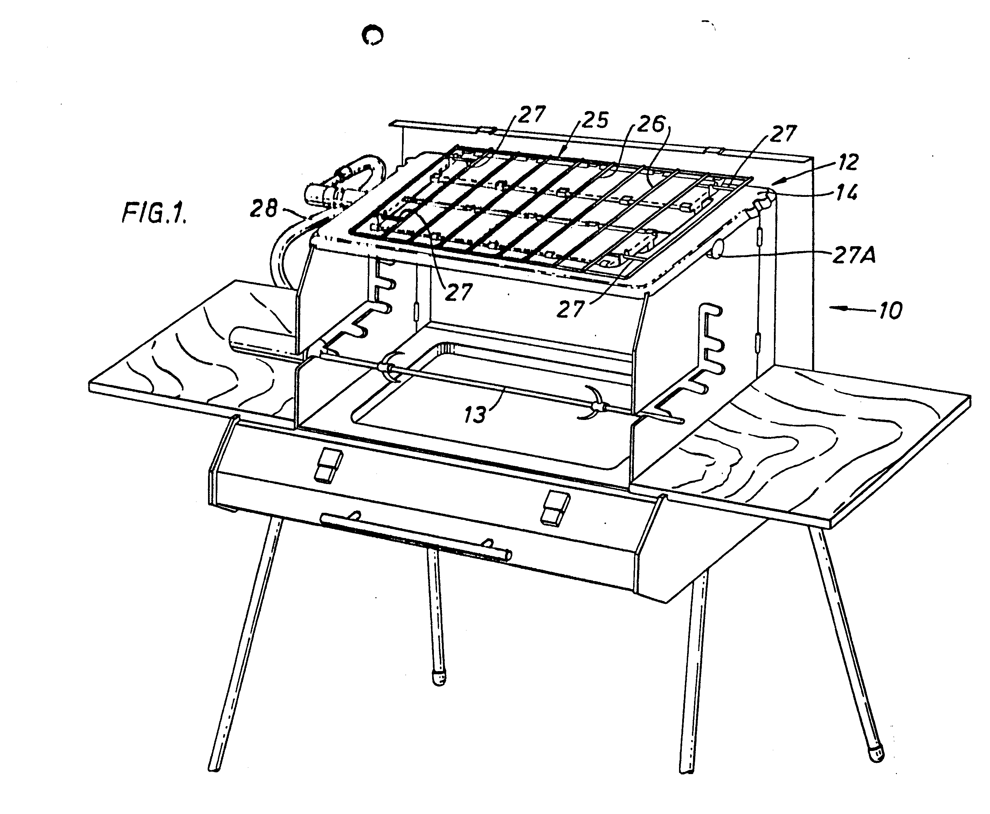

Each plate 18 has radiant panel 19 mounted on a sheet metal base 20 which, along one longitudinal side has a plurality of tongues 21, and at each end has a slotted web 22 which extends upright when the radiant panel 19 is facing upwards (Fig. 1). The base 20 also has means 23 at its sides, remote from the tongues 21, for pivotally mounting the plate 18 to the side edges of the frame opening, slightly below the surface of the frame 14.

The plates 18 are movable between two positions namely a "grilling" position (Fig.3) and a "non-grilling" position (Fig. 1). In the former, the radiant plates 19 overlie the burner tube 16 and mask, i.e., close the opening 17, facing downwards and with the tongues 21 resting in the tube 16; in the latter the radiant plates 19 face upwards and overlie the surface of the frame on respective sides of the opening 17, leaving the opening uncovered, so that heat from the burning gas jets of the burner tube 16 can pass through. The plates 18 are movable by manually pivoting them, one at a time, about their respective axes. A hole (not shown) may be provided in the base 20 to be engaged by a poker or similar instrument to perform the pivoting operation, or the poker may simply engage a tongue 21 to lift the plate. A grid 25 or like meshed support is mountable over the area of and above the opening 17; the grid is required only when the plates are in their outboard non-grilling position. The grid has a plurality of longitudinally spaced parallel transverse rods 26 and also a pair of short longitudinally extend rods 27 at each end of the grid. These short rods 27 rest in the slots of the upstanding webs 22. The burner tube 16 is blind at one end 27A, and at the other end has an air inlet connected by flexible piping 28 to a supply of low or high pressure bottle gas (not shown).

In use, with the plates 18 in an inboard grilling position (Fig.3) gas from the pressurised bottle is fed through the piping to the burner tube 16 and is lit when it exhausts through the gas jet outlets. The gas jets play upon, and heat is absorbed by, the radiant panels 19 and infra-red rays are reflected downwards. Any food located on a spit 13 or grill-pan, or tray positioned under the radiant panels is cooked. A battery-operable motor (not shown) may be mounted on one end of the spit 13 to rotate it. After the grilling of the food is completed, the plates 18 are moved to their outboard non-grilling position and the grid 25 placed thereover so that, a kettle, pot or a pan can be placed on the grid to receive heat from the gas through the opening 17.

Thus, a gas cooker as hereinbefore described, is advantageous over known cookers in that the burner unit is convertible for use as a griller or for boiling or cooking in a pot or pan. This is particularly advantageous over portable gas cookers such as rotisseries which are capable only of grilling food.

The radiant panels may be of expanded metal.

In a modification, the panels are hinged along the longitudinal edge of the frame.

The rotisserie, when not in use, can be collapsed into a compact unit resembling a suitcase as shown in Fig. 5. The burner unit may be incorporated in other types of gas cooker, such as a domestic mains-fed cooker or butane gas-fed cooker.

The frame opening and reflector plates may be other than rectangular- for example oval or circular.

More than two reflector plates may be provided.

CLAIMS :

1.    A gas cooker including a burner unit whereof a horizontal burner tube is mounted in underslung relation to a frame symmetrical thereabout and whereby an opening in the frame can be masked immediately above the burner tube, or unmasked at least in part, by a reflector in the form of at least two plates each hinged or pivoted for movement about an axis spaced within the opening whereby the opening can be masked for grilling purposes or unmasked at least in part for heating a cooking utensil located over the opening.

2.    A gas cooker as claimed in Claim 1, in which each reflector plate comprises a radiant panel mounted on a sheet metal base.

3.    A gas cooker as claimed in Claim 2, in which the base includes a plurality of tongues along one edge for engaging the burner tube when the plate is in the masking position.

4.    A burner unit for a gas cooker including a burner unit whereof a horizontal burner tube is mounted in underslung relation to a frame symmetrical thereabout and whereby an opening in the frame can be masked immediately above the burner tube, or unmasked at least in part, by a reflector in the form of at least two plates each hinged or pivoted for movement about an axis spaced within the opening.

5.    A gas cooker substantially as hereinbefore described with reference to Figs. 1 and 5 of the accompanying drawings.

6.    A burner unit for a gas cooker substantially as hereinbefore described with reference to Figs. 2, 3 and 4 of the accompanying drawings.

FIG.1.

27 25 26 27

12

14

28

27A

27

27

10

13

1/3

000717

FIG.2.

17 16 15 19 21 12

27A

20 14

FIG.3.

18 12 14

FIG.5.

3/3

FIG. 4.

# EUROPEAN SEARCH REPORT

| Category | Citation of document with indication, where appropriate, of relevant passages | Relevant to claim | CLASSIFICATION OF THE APPLICATION (Int. Cl.3) |
|---|---|---|---|
| | FR - A - 405 923 (PELSMAEKERS) <br> * Figure 1; page 2 * <br><br> -- | 1,4-6 | A 47 J 37/07 <br> F 24 C 3/02 |
| | GB - A - 150 380 (HERSEY et al.) <br> * Figures 1 and 2 * <br><br> -- | 1,5,6 | |
| | US - A - 2 985 097 (NEVIN et al.) <br> * Column 4, figure 2 * <br><br> -- | 1,4-6 | |
| | FR - A - 1 480 680 (SCANZIO) <br> * Figure 1 * <br><br> -- | 1,5 | TECHNICAL FIELDS SEARCHED (Int.Cl.2) <br><br> A 47 J <br> F 24 C |
| A | FR - A - 1 188 676 (BARBERIS) <br> * Figures 1 and 2 * <br><br> -- | 1 | |
| A | US - A - 1 548 185 (CARR) <br> * The whole document * <br><br> -- | 1 | |
| A | BE - A - 511 099 (KUPPERSBUSCH) <br> * Figures 2 and 3; page 2 * <br><br> -- | 1 | |
| A | DE - U - 75.01622 (ARMATURENWERK NIEDERSCHEID) <br> * Claim 1; figure 1 * <br><br> ---- | 1 | |

## DOCUMENTS CONSIDERED TO BE RELEVANT

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 18-09-1979 | SCHARTZ |

EPO Form 1503.1  06.78